# EUROPEAN PATENT SPECIFICATION

(11) **EP 1 354 760 B1**
(45) Date of publication and mention of the grant of the patent: **09.05.2007**
(21) Application number: 03250381.5
(22) Date of filing: 22.01.2003
(51) Int. Cl.: B60P 3/42, B60R 21/02

(54) **A movable bulkhead for a van**
Verschiebbare Trennwand für Lieferwagen
Cloison déplaçable pour fourgonnette

(30) Priority: 25.01.2002 GB 0201662
(43) Date of publication of application: 22.10.2003
(73) Proprietor: Primera Consultancy and Design Limited, Framlingham, Woodbridge IP13 9LL (GB)
(72) Inventor: Betts, Patrick Hugh, Framlingham, Woodbridge IP13 9LL (GB); Lovett, Julian Charles, Saxmundham, Woodbridge IP17 1DT (GB)
(74) Representative: Copp, David Christopher

(56) References cited:
- EP-A- 0 693 396
- DE-C- 822 656
- FR-A- 2 632 580
- FR-A- 2 633 884
- FR-A- 2 663 270
- FR-A- 2 725 669
- US-A- 4 621 856

## Description

The present invention relates to a bulkhead for a van, notably a rigid chassis panel-type van, and to a van having a moveable bulkhead to the cabin area.

Rigid chassis vans like for example FR 2633884 for transporting loads by road typically have the forward portion of the body formed as a cab containing the driver and passenger seats, the dashboard and controls and the steering wheel bounded by the windscreen and engine bay at the forward end and by the load-carrying area to the rear. The cab is often formed as a separate structure isolated from the load carrying area to the rear of the cab. However, in panel vans the cab side walls and roof extend rearwardly to form the side walls and roof of the load-carrying portion of the van body so that the cab is formed as an integral part of the load-carrying portion of the body. For reasons of body rigidity, security and comfort, there is usually a fixed transverse partition or bulkhead between the cab and the load-carrying portion of the body. Such a bulkhead typically extends for the full width and height of the cabin and effectively forms the rear wall of the cab. In a panel van the load-carrying rear portion of the body is of substantially the same height and width as the cab. In some forms of Luton van body, the load-carrying area of the body extends over the top of the cab and the bulkhead at the rear of the cab does not extend for the full height of the body of the van, but extends forwardly to form the roof of the cab. For convenience the term panel van will be used herein to denote both panel and Luton type van bodies in which the cab is formed as an integral part of the body work defining the load-carrying area of the van. In such panel vans the bulkhead defining the rear of the cab is fixed and forms a partition wall between the cab and the load-carrying portion of the van.

We have now devised a form of bulkhead which enables the operator of the van to have the flexibility of increasing the capacity of the cab to enable a larger crew to be carried in the cab and/or to provide overnight sleeping accommodation for the driver and a crew member or to retain the full load carrying volume of the van.

Accordingly, the present invention provides a van having a driver's cab, a load space behind the cab and a bulkhead separating the cab from the load space, wherein the bulkhead can be moved backwards and forwards within the van to vary the relative volumes of the cab and the load space.

Preferably, the bulkhead carries on its forward face one or more upholstered members which extend from the face of the bulkhead to form additional seats or sleeping bunks in the enlarged cab. Preferably the upholstered members are demountable or are secured to the bulkhead whereby they can be moved from a rest position at which they lie substantially parallel to the plane of the bulkhead to a second position at which at least one of upholstered members adopts a position substantially normal to the plane of the bulkhead to serve as the squab of a seat and/or a sleeping bunk. Preferably, there are two such upholstered members located in edge to edge relationship and one above the other so that the lower upholstered member can form the squab of the seat and the upper upholstered member can form the rear squab of the seat or a second sleeping bunk.

The invention can be applied to vans, including Luton and panel type vans, which have a driver's cab and a load space behind.

The bulkhead extends transversely for substantially the full height and width of the cab to form the rear wall of the cab. However, instead of being fixed as with conventional body designs, the bulkhead is capable of being moved rearwardly to enlarge the cab plan area so that additional crew members can be accommodated in the cab on the seats formed by lowering the upholstered members from the bulkhead. The bulkhead can be of any suitable form of construction which is sufficiently strong to carry the loads imposed on it by the use of the upholstered members and by any movement of the load within the load-carrying portion of the van. Thus, the bulkhead can be formed as a metal, for example sheet aluminium, panel, optionally as a sandwich type construction as used in the manufacture of body panels in vehicle construction. Alternatively, the bulkhead can be formed from fibre reinforced plastic moulded panels. The bulkhead can be provided with metal or other reinforcing bars or rods and with one or more window panels to permit rearward vision for the driver.

The bulkhead can be moved by any suitable mechanism. Thus, the bulkhead can carry mounting lugs or the like which are bolted to suitable anchorage points in the floor, walls and roof of the van and the bulkhead moved manually as a unit once the bolts securing it in position have been removed. Alternatively, the bulkhead can be carried as a sliding fit upon rails mounted in the floor, side walls and/or the roof of the van and can be locked in the desired position by clamps or other securing means.

For convenience, the invention will be described hereinafter in terms of a bulkhead carried as a sliding fit upon grooved rails mounted on the roof of the van. Such an arrangement permits the bulkhead to be moved rearwardly to any suitable extent within the length of travel permitted by the rails so as to enlarge the plan area of the cab by any desired extent.

The bulkhead can be moved between its forward and rearward positions by any suitable mechanism. For example, the bulkhead can be moved manually upon its slide rails once the locking mechanisms securing it in position have been released. However, it may be preferred that the bulkhead is moved by means of a screw mechanism or by electric or hydraulic means so that the movement of the bulkhead can be achieved with the minimum of manual labour. Any suitable mechanism for moving the bulkhead can be used and this can be of conventional design and manufacture.

The bulkhead adopts an initial position at which it forms the rear wall of a cab of conventional size. However, it can readily be moved rearwardly to enlarge the useable volume of the cab. This increase in volume can be used to accommodate one or more extra rows of seats behind the driver and passenger seats which are conventionally located as a single side by side row of seats during the manufacture of the van. Such extra seats can be provided as demountable individual seats which locate in and are secured by anchorage points in the floor of the enlarged plan area of the cab. For example, the seats can have feet which are secured into anchorage points to which the bulkhead is secured in an end position and which are exposed when the bulkhead is moved rearwardly. Such seats and their manner of location and securement can be of conventional design. Such an arrangement enables a conventional panel van to be modified to carry a number of passengers in addition to those seated in the front of the cab.

However, it is particularly preferred that the seats are mounted on the bulkhead and are deployed once the bulkhead has been moved rearwardly to enlarge the cab area. For example, the extra seating can be provided as one or more seating squabs which are pivoted downwardly from the cab face of the bulkhead. Thus, a transverse sprung or foam plastic upholstered seat squab can extend across substantially the full side to side width of the bulkhead and be hinged to the bulkhead so that it normally lies substantially parallel to the face of the bulkhead. The squab can be pivoted out from its stored position parallel to the bulkhead to adopt a position substantially normal to the plane of the bulkhead and thus form a bench seat in the enlarged cab. The pivoting mechanism by which the squab is deployed can be of any suitable type and can incorporate safety locking mechanisms and/or dependent legs and/or stays to retain it in the deployed position. If desired, the deployment of the squab can be achieved by any suitable screw operated, electric or hydraulic mechanism, which can be inter-linked with the rearward movement of the bulkhead.

The squab can be configured so that it serves as a bench seat, for example by forming dips in its surface corresponding in number to the number of occupants of the bench seat. Fold down arms may be provided to subdivide the seat into individual seating areas. However, it is preferred that the squab be configured so that it can act as a sleeping bunk within the enlarged cab area. To this end, it may be desired that any rake which the squab has when used as a bench seat can be minimised to provide a substantially horizontal sleeping surface.

It is also preferred that the bulkhead carries a second upholstered member which acts as the rear squab of the deployed bench seat. Such a second upholstered member can be of conventional design and construction and can be fixed to the bulkhead to form a fixed squab. However, it is preferred that this second upholstered member or squab should also be capable of being deployed to an orientation substantially normal to the plane of the bulkhead so that it can adopt a position above and spaced apart from the first upholstered member so that it can act as a second sleeping bunk within the rear of the enlarged cab. Such a second upholstered member can be of similar design and construction to the first upholstered member and can be deployed and supported in the deployed position by any suitable means. Typically, the second upholstered member will adopt a deployed position from 50 to 90 cms above the level of the first upholstered member to provide easy access to both the upper and lower bunk beds formed by the two upholstered members.

The cab and the bulkhead can be provided with a range of other members which enhance the utility of the enlarged cab area and the bunk beds. For example, reading lights and additional ventilation can be provided to the bulkhead or to the enlarged cab area. It is particularly preferred to provide additional means of access into the enlarged cab area, for example by means of one or more hinged or sliding doors in the side walls of the van body.

Where the invention is applied to a Luton van body, the bulkhead will preferably extend upwards for the height of the cab portion of the body and will then extend forwardly to provide a member which overlies the floor of the forward extension of the load carrying area over the cab area. This forward extension of the bulkhead can be journalled in or carried by longitudinally extending rails mounted on the cab roof. These rails serve to support and guide the bulkhead during its movement to and fro with respect to the cab and can provide the sole support for the bulkhead.

The bulkhead of the invention can be installed in an existing van body with minimum disruption of the existing structure of the van. Alternatively, the bulkhead can be incorporated into the body of a new van as it is being built. The invention therefore also provides a kit of parts for installation in a van so as to provide the van with the moveable bulkhead of the invention.

The invention enables a conventional van to be modified to carry additional crew members. If desired, the rearward travel of the bulkhead can be sufficient to enlarge the cab to such an extent that two or more extra rows of seats can be accommodated so as to convert the van into a minibus type of vehicle, further extending the uses to which the van can be put by an operator without the need to purchase additional vehicles.

It will be appreciated that the upholstered members used to provide the seat squabs and/or bunks beds need not be upholstered, but could be in the form of frames provided with slats, webbing or other supports means upon which a mattress or cushions are placed once the frames have been deployed to form the bases of the seats or bunk beds. Such a form of upholstered member may be desirable where it is required to reduce the overall front to back dimensions of the bulkhead. The term upholstered member should therefore be construed as including base support members which are adapted to form the bases of seats or bunk beds and which are adapted to accept one or more upholstered cushions or mattresses.

It will also be appreciated that the upholstered members need not be pivotally attached to the bulkhead, but could be demountably attached, for example by inter-engaging pins and lugs, so that the members are demountable and are deployed by inserting the pins in the lugs when the members are required to be mounted in the enlarged cab.

The invention will now be further described, by way of example, with reference to the accompanying drawings, in which:
- Figure 1: is a plan view of the cab area of a panel van fitted with a bulkhead of the invention;
- Figure 2: is a vertical cross sectional view through the van of Figure 1;
- Figure 3: is a perspective view of the interior of the van of Figure 1;
- Figures 4a, 4b, 4c and 4d: show alternative internal configurations of the van; and
- Figure 5: shows details of the construction of the bulkhead.

The panel van shown in the figures has a rigid chassis on which is mounted a body comprising a forward cab portion 1 containing driver and passenger seats 2. The body extends rearwardly to enclose a load carrying area 3 of the van.

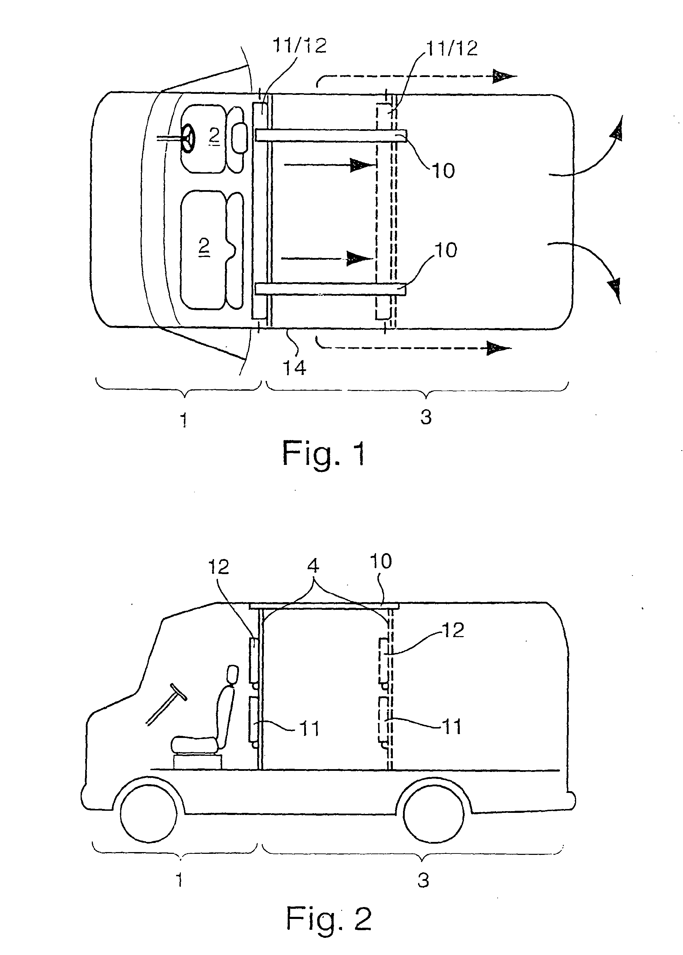

Behind the seats 2 a movable bulkhead 4 is mounted. This is suspended from rails 10 mounted on the ceiling of the van and extending rearwardly of the cab portion to the extent required to achieve the desired enlargement of the cab. For example, the length of the rails may be between 1 and 1.5 metres. The bulkhead 4 can be secured either in a forward or a rearward position. In Figures 1 and 2 the bulkhead is shown in its forward position in solid lines and in its rearward position in dotted lines. The bulkhead can be secured in one or other position both at its top edge and at its lower edge, in a manner to be described.

It will be seen from Figure 2 that the cab facing side or the forward face of the bulkhead 4 carries two squab members 11 and 12 which are pivotally mounted at one edge to the bulkhead and which are folded up flat against the bulkhead. The squabs extend across substantially the full width of the bulkhead.

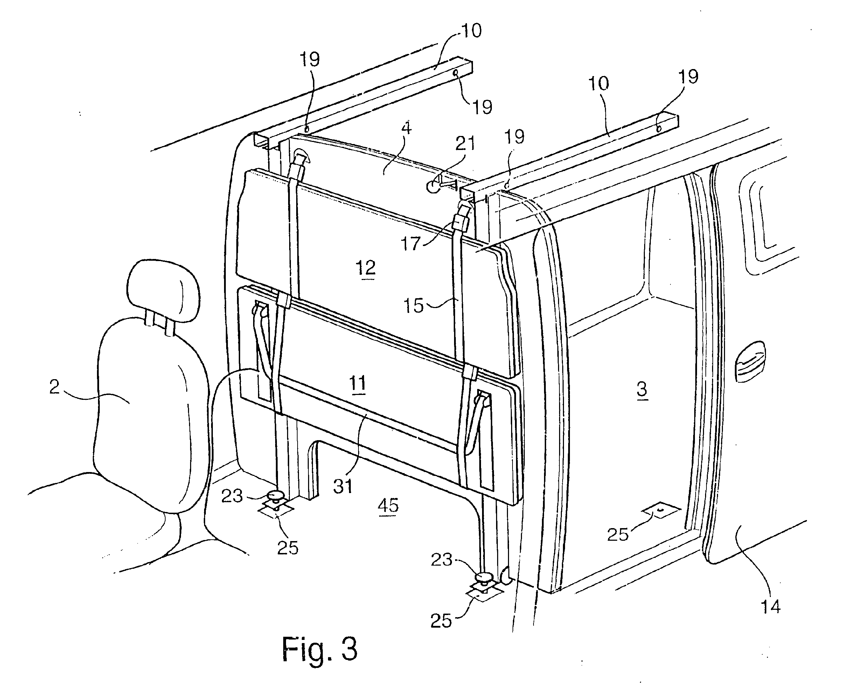

The travel of the bulkhead between its forward and rearward positions corresponds approximately to the size of the opening of a side sliding door 14 (see Figure 3). When the bulkhead is in its forward position, as shown in Figure 3, opening the sliding door gives full access to the load carrying area 3 of the van. When the bulkhead is in its rearward position, opening the sliding door gives access to the cab area of the van.

As can be seen particularly in Figure 3, both squab members 11 and 12 comprise rigid frames onto which cushions or other upholstery are fitted. The frames are hinged at their lower edges to the bulkhead 4. When the bulkhead is in its forward position as shown in Figure 3, the squabs are folded flat against the bulkhead and are retained in position by straps 15. The straps have plug-together buckles 17 which can be released when the squabs are to be folded down.

The top edge of the bulkhead is provided with rollers or slide shoes which slide in the rails 10. The rails are provided with holes 19, and a spring loaded pin, indicated at 21, will be inserted through the holes to lock the top edge of the bulkhead in either the forward or rearward position.

At the bottom edge, the bulkhead has floor pins 23 which can be screwed into mounting plates 25 fixed in the floor of the van. In this way the bulkhead can be secured satisfactorily in either forward or rearward positions.

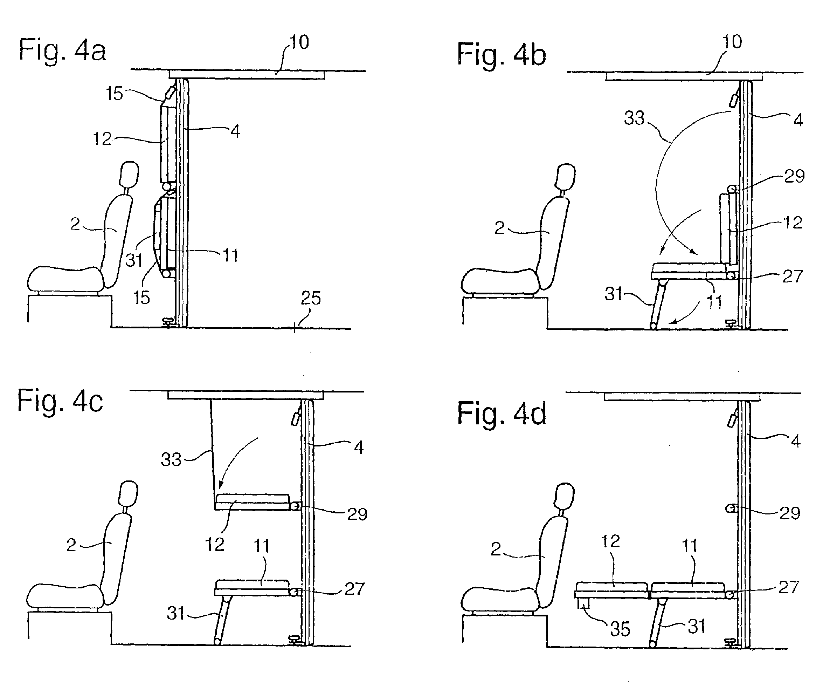

Figures 4 show various different configurations.

Figure 4a shows the bulkhead in its forward position with the squabs 11 and 12 folded up and secured in position by the straps 15. The location of the rear mounting plates 25 can be seen in this Figure. In Figure 4b, the bulkhead 4 has been moved to its rear most position and secured there. The lower squab 11 has been folded down about its hinge point 27, and a supporting leg 29 has been folded out from the underside of the squab to support the squab in a horizontal position. Next, the upper squab 12 has been pivoted down through 180° about its pivot axis 29, as indicated by an arrow 33, so that the upper squab 12 forms a back rest to the lower, seat squab 11. In this position, the squabs 11 and 12 form a bench seat across the width of the van, and entry to this seat can be had through the side sliding door 14.

Figure 4c shows an alternative configuration, where the upper squab 12 is lowered to a horizontal position, with a front edge of this squab being supported from the van roof by straps 31. In this position, the upper and lower squabs 11 and 12 can be used as upper and lower bunk beds.

In Figure 4d the squabs 11 and 12 are arranged to form a double bed platform. The upper squab 12 is detached from its hinged mounting 29 and is linked along one edge to the front edge of the lower squab 11, with the other edge of the squab 12 being supported on a transverse beam 35 which may be permanently present across the width of the van, or may be a beam which can be slotted into appropriate supports mounted on the van walls, when the Figure 4d configuration is to be implemented.

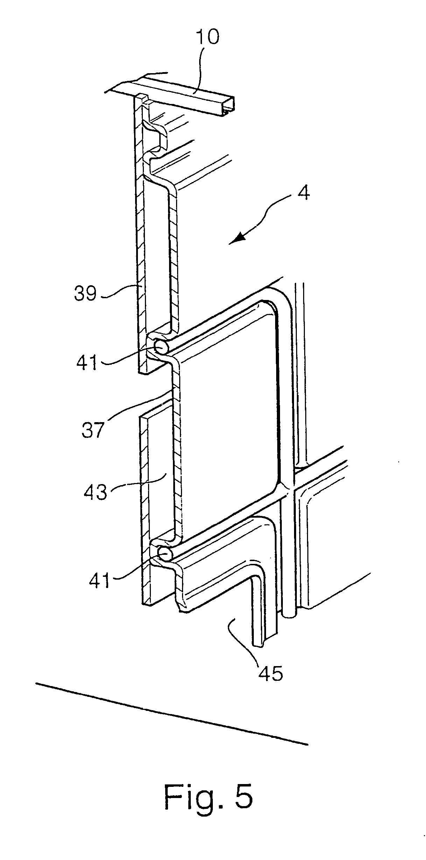

The bulkhead may be manufactured from two fibreglass skins shown in Figure 5 at 37 and 39. The fibreglass structures can be reinforced by tubular steel bars 41 which can extend both vertically and horizontally across the back of the bulkhead to provide the necessary stiffness. The rear skin 37 can be recessed relative to the front skin 39, and this makes it possible to use the gap between the front and rear skins as a pocket 43, at least part of which may be provided with a net or some other covering which allows visibility of the contents of the pocket 43. It will also be seen from Figure 5 (and from Figure 3) that the bottom edge of the bulkhead is provided with an opening 45 so that long loads to be carried in the van can be placed on the van floor and can extend right through into the cab area, if required.

The invention thus provides a very versatile arrangement for a van. Changing the configuration between the various alternatives shown in Figures 4 can be done without any tools and with a minimum of difficulty. This allows the carrying capacity of the van to be varied as desired between people and loads.

## Claims

1. A van having a driver's cab, a load space behind the cab (1), and a bulkhead (4) separating the cab from the load space (3), the bulkhead extending transversely for substantially the full width and height of the cab, and being movable backwards and forwards in the van to vary the relative sizes of the cab(1) and the load space (3), **characterised in that** the bulkhead (4) has slide shoes or rollers engaging in rails (10) mounted on the roof of the van and mounting means (23, 25) on the floor to lock the bulkhead in either a forward or a rearward position, and the bulkhead has, on its forward facing face, an upholstered member or members which can extend from the face of the bulkhead (4) to form additional seats, wherein the upholstered members are secured to the bulkhead whereby they can be moved from a rest position at which they lie substantially parallel to the plane of the bulkhead to a second, position at which at least one of upholstered members adopts a position substantially normal to the plane of the bulkhead (4) to serve as the squab (11) of a seat.

2. A van as claimed in Claim 1, wherein there are two such upholstered members (11, 12) located one above the other so that the lower upholstered member (11) can form the squab of a seat and the upper upholstered member (12) can form the backrest to the rear squab of the seat or a second sleeping bunk.

3. A van as claimed in any preceding claim, wherein the bulkhead (4) is formed from fibre reinforced plastic moulded panels.

4. A van as claimed in Claim 3, wherein the bulkhead (4) is provided with metal or other reinforcing bars or rods (41).

5. A van as claimed in any preceding claim, wherein the bulkhead is provided with one or more window panels to permit rearward vision for the driver.

6. A van as claimed in any preceding claim, wherein the bulkhead (4) is provided with a floor level aperture (45) to allow long loads to project through the bulkhead into the driver's cab (1).

7. A van as claimed in any preceding claim, wherein a sliding door (14) is provided which closes an opening on one side of the van, and the bulkhead (4) is movable between a first position (Figure 3) where it is at the front of the opening of the sliding door, so that opening the sliding door gives access to the load space (3) and a second position where it is at the rear of the sliding door opening so that opening the sliding door gives access to the rear part of the enlarged driver's cab (1).

8. A van as claimed in any preceding claim, wherein the bulkhead (4) is made up of two skins, and a space can be constructed between the skins to act as a pocket in which objects can be stored.

9. A kit of parts for providing a movable bulkhead in a van, the kit comprising a set of guide rails (10) to be mounted fore and aft in the van and a bulkhead (4) of area less than the internal cross-sectional area of the van, the bulkhead having means whereby it can be mounted on the guide rails for forward and backward movement, and the kit including means for securing the bulkhead in more than one position relative to the guide rails and wherein the bulkhead has, on its forward facing face, an upholstered member or members which can extend from the face of the bulkhead (4) to form additional seats, wherein the upholstered members are secured to the bulkhead whereby they can be moved from a rest position at which they lie substantially parallel to the plane of the bulkhead to a second position at which at least one of upholstered members adopts a position substantially normal to the plane of the bulkhead (4) to serve as the squab (11) of a seat.

## Patentansprüche

1. Lieferwagen mit einer Fahrerkabine, einem Laderaum hinter der Kabine (1) und einer Trennwand (4), die die Kabine von dem Laderaum (3) trennt, wobei sich die Trennwand über im Wesentlichen die ganze Breite und Höhe der Kabine in Querrichtung erstreckt und im Lieferwagen nach vorne und hinten beweglich ist, um die relativen Größen der Kabine (1) und des Laderaums (3) zu ändern, **dadurch gekennzeichnet, dass** die Trennwand (4) Gleitschuhe oder Rollen, die in am Dach des Lieferwagens angebrachte Schienen (10) eingreifen, und Befestigungsmittel (23, 25) am Boden zur Verriegelung der Trennwand in entweder einer vorderen oder hinteren Position, aufweist, und die Trennwand an ihrer nach vorne weisenden Fläche ein gepolstertes Glied oder gepolsterte Glieder aufweist, das bzw. die sich von der Fläche der Trennwand (4) erstreckt bzw. erstrecken, um zusätzliche Sitze zu bilden, wobei die gepolsterten Glieder an der Trennwand befestigt sind, wobei sie aus einer Ruheposition, in der sie im Wesentlichen parallel zur Ebene der Trennwand liegen, in eine zweite Position, in der mindestens eines der gepolsterten Glieder eine Position einnimmt, die im Wesentlichen senkrecht zur Ebene der Trennwand (4) verläuft, um als Sitzpolster (11) eines Sitzes zu dienen, bewegt werden können.

2. Lieferwagen nach Anspruch 1, bei dem zwei solche gepolsterten Glieder (11, 12) übereinander angeordnet sind, so dass das untere gepolsterte Glied (11) das Sitzpolster eines Sitzes und das obere gepolsterte Glied (12) die Rückenlehne oder das hintere Sitzpolster des Sitzes oder eine zweite Schlafkoje bilden kann.

3. Lieferwagen nach einem der vorhergehenden Ansprüche, bei dem die Trennwand (4) aus faserverstärkten geformten Kunststoffplatten hergestellt ist.

4. Lieferwagen nach Anspruch 3, bei dem die Trennwand (4) mit Metall- oder anderen Verstärkungsstangen oder -stäben (41) versehen ist.

5. Lieferwagen nach einem der vorhergehenden Ansprüche, bei dem die Trennwand mit einer oder mehreren Fensterscheiben versehen ist, um die Sicht des Fahrers nach hinten zu gestatten.

6. Lieferwagen nach einem der vorhergehenden Ansprüche, bei dem die Trennwand (4) mit einer Öffnung (45) auf Bodenhöhe versehen ist, damit lange Lasten durch die Trennwand in die Fahrerkabine (1) ragen können.

7. Lieferwagen nach einem der vorhergehenden Ansprüche, bei dem eine Schiebetür (14) vorgesehen ist, die eine Öffnung auf einer Seite des Lieferwagens schließt, und die Trennwand (4) zwischen einer ersten Position (Figur 3), in der sie sich vorne an der Öffnung der Schiebetür befindet, so dass durch Öffnen der Schiebetür Zugang zum Laderaum (3) gewährt wird, und einer zweiten Position, in der sie sich hinten an der Schiebetüröffnung befindet, so dass durch Öffnen der Schiebetür Zugang zum hinteren Teil der vergrößerten Fahrerkabine (1) gewährt wird, beweglich ist.

8. Lieferwagen nach einem der vorhergehenden Ansprüche, bei dem die Trennwand (4) aus zwei Häuten hergestellt ist und zwischen den Häuten ein Raum hergestellt werden kann, der als eine Tasche dient, in der Objekte gelagert werden können.

9. Teileausrüstung zur Bereitstellung einer beweglichen Trennwand in einem Lieferwagen, wobei die Ausrüstung einen Satz von Führungsschienen (10), die längsseits im Lieferwagen angebracht werden sollen, und eine Trennwand (4), deren Fläche kleiner ist als die Innenquerschnittsfläche des Lieferwagens, umfasst, wobei die Trennwand Mittel aufweist, mit denen sie an den Führungsschienen zur Vor- und Rückbewegung angebracht werden kann, und die Ausrüstung Mittel zur Befestigung der Trennwand in mehr als einer Position bezüglich der Führungsschienen enthält, und wobei die Trennwand auf ihrer nach vorne weisenden Fläche ein gepolstertes Glied oder gepolsterte Glieder aufweist, das bzw. die sich von der Fläche der Trennwand (4) erstrecken kann bzw. können, um zusätzliche Sitze zu bilden, wobei die gepolsterten Glieder an der Trennwand befestigt sind, wobei sie aus einer Ruheposition, in der sie im Wesentlichen parallel zur Ebene der Trennwand liegen, in eine zweite Position, in der mindestens eines der gepolsterten Glieder eine Position einnimmt, die im Wesentlichen senkrecht zur Ebene der Trennwand (4) verläuft, um als Sitzpolster (11) eines Sitzes zu dienen, bewegt werden können.

## Revendications

1. Fourgonnette présentant un habitacle de conducteur, un espace de chargement derrière l'habitacle (1) et une cloison (4) séparant l'habitacle de l'espace de chargement (3), la cloison s'étendant transversalement sur sensiblement la totalité de la largeur et de la hauteur de l'habitacle et étant mobile vers l'arrière et vers l'avant dans la fourgonnette pour faire varier les dimensions relatives de l'habitacle (1) et de l'espace de chargement (3),
**caractérisée en ce que** la cloison (4) présente des sabots coulissants ou rouleaux coopérant dans des rails (10) montés sur le toit de la fourgonnette et des moyens de montage (23, 25) sur le plancher pour verrouiller la cloison soit dans une position avant, soit dans une position arrière, et la cloison présentant, sur sa face dirigée vers l'avant, un élément ou des éléments rembourrés qui peuvent s'étendre à partir de la face de la cloison (4) pour former des sièges supplémentaires, dans laquelle les éléments rembourrés sont fixés sur la cloison, de telle sorte qu'ils peuvent se déplacer à partir d'une position de repos sur laquelle ils se situent sensiblement parallèlement au plan de la cloison jusqu'à une seconde position sur laquelle au moins l'un des éléments rembourrés adopte une position sensiblement perpendiculaire au plan de la cloison (4) pour servir de coussin (11) d'un siège.

2. Fourgonnette selon la revendication 1, dans laquelle deux de ces éléments rembourrés (11, 12) sont situés l'un au-dessus de l'autre, de sorte que l'élément rembourré inférieur (11) peut former le coussin d'un siège et l'élément rembourré supérieur (12) peut former le dossier du coussin arrière du siège ou une seconde couchette.

3. Fourgonnette selon l'une quelconque des revendications précédentes, dans laquelle la cloison (4) est formée à partir de panneaux moulés en plastique renforcé par fibres.

4. Fourgonnette selon la revendication 3, dans laquelle la cloison (4) est munie de barres de renforcement métalliques ou autres ou de tiges (41).

5. Fourgonnette selon l'une quelconque des revendications précédentes, dans laquelle la cloison est munie d'un ou de plusieurs panneaux de vitre pour permettre au chauffeur la vision vers l'arrière.

6. Fourgonnette selon l'une quelconque des revendications précédentes, dans laquelle la cloison (4) est munie d'une ouverture du niveau de plancher (45) pour permettre aux charges de grande longueur de traverser la cloison jusque dans l'habitacle du conducteur (1).

7. Fourgonnette selon l'une quelconque des revendications précédentes, dans laquelle est prévue une porte coulissante (14) qui ferme une ouverture sur un côté de la fourgonnette, et la cloison (4) est mobile entre une première position (Figure 3) où elle se trouve à l'avant de l'ouverture de la porte coulissante, de telle sorte que l'ouverture de la porte coulissante donne accès à l'espace de chargement (3), et une seconde position où elle se situe à l'arrière de l'ouverture de la porte coulissante, de sorte que l'ouverture de la porte coulissante donne accès à la partie arrière de l'habitacle agrandi du conducteur (1).

8. Fourgonnette selon l'une quelconque des revendications précédentes, dans laquelle la cloison (4) est constituée de deux membranes, et un espace peut être construit entre les membranes pour servir de poche dans laquelle des objets peuvent être rangés.

9. Ensemble de pièces pour fournir une cloison mobile dans une fourgonnette, ensemble comprenant une série de rails de guidage (10) à monter à l'avant et à l'arrière de la fourgonnette et une cloison (4) de superficie inférieure à la superficie en section transversale interne de la fourgonnette, la cloison ayant des moyens permettant le montage sur les rails de guidage pour le mouvement vers l'avant et vers l'arrière, et l'ensemble comprenant des moyens pour fixer la cloison sur plus d'une seule position par rapport aux rails de guidage, et dans lequel la cloison présente, sur sa face dirigée vers l'avant, un élément ou des éléments rembourrés qui peuvent s'étendre à partir de la face de la cloison (4) pour former des sièges supplémentaires, dans lequel des éléments rembourrés sont fixés sur la cloison, de façon à pouvoir être déplacés depuis une position de repos sur laquelle ils se situent sensiblement parallèlement au plan de la cloison jusqu'à une seconde position sur laquelle au moins l'un des éléments rembourrés adopte une position sensiblement perpendiculaire au plan de la cloison (4) pour servir de coussin (11) d'un siège.
